# EUROPÄISCHE PATENTANMELDUNG

(11) **EP 3 181 527 A1**
(43) Veröffentlichungstag der Anmeldung: **21.06.2017**
(21) Anmeldenummer: 16198391.1
(22) Anmeldetag: 11.11.2016
(51) Int. Cl.: C03B 19/10

(54) **VERFAHREN UND ANLAGE ZUR HERSTELLUNG VON BLÄHGLASPARTIKELN**

(30) Priorität: 17.12.2015 DE 102015225766
(71) Anmelder: DENNERT PORAVER GmbH, 92353 Postbauer-Heng (DE)
(72) Erfinder: DENNERT, Hans Veit, 96132 Schlüsselfeld (DE)
(74) Vertreter: FDST Patentanwälte

(57) **Zusammenfassung**

Es werden ein Verfahren zur Herstellung von Blähglaspartikeln (B) und eine zugehörige Anlage (1) angegeben. Verfahrensgemäß ist vorgesehen, eine wässrige Suspension (A) aus Ausgangsstoffen, umfassend Glasmehl und Wasserglas, zur Bildung von Brenngutgutpartikeln (P) zu versprühen, und die Brenngutpartikel (P) in einem Prozessraum (4) eines Brennofens (2) bei einer die Erweichungstemperatur des Glasmehls überschreitenden Brenntemperatur (T2) zu brennen, so dass die Brenngutpartikel (P) zur Bildung der Blähglaspartikel (B) multizellulär expandieren. Die Suspension (A) der Ausgangsstoffe wird dabei zur Bildung der Brenngutpartikel (P) unmittelbar in den Prozessraum (4) des Brennofens (2) versprüht.

## Beschreibung

Die Erfindung bezieht sich auf ein Verfahren zur Herstellung von Blähglaspartikeln sowie auf eine Anlage zur Durchführung des Verfahrens. Die Erfindung bezieht sich insbesondere auf die Herstellung von Blähglas-Mikropartikeln.

Als "Mikropartikel" werden hier und im Folgenden allgemein Partikel mit einem Partikeldurchmesser im Sub-Millimeterbereich (ca. 1 Mikrometer bis 1.000 Mikrometer) bezeichnet. Als "Blähglas-Mikropartikel" werden dabei solche Mikropartikel aus einem Glasmaterial bezeichnet, die eine Vielzahl von in einem Expansionsprozess (Blähprozess) entstandene Hohlräume einschließen. Entsprechend werden solche Partikel auch als "multizellulär" expandierte Partikel bezeichnet. Blähglas-Partikel haben somit die Form eines erstarrten Glas-Schaums mit einer sphärischen oder unregelmäßig geformten Außenkontur.

Blähglaspartikel werden vielfach als Leichtzuschlagstoffe in Kompositmaterialien und Leichtbeton eingesetzt. Des Weiteren finden diese Mikropartikel unter anderem Verwendung in der Medizin sowie der Verbrauchsgüterindustrie.

Zur Herstellung von Blähglaspartikeln werden häufig direkt befeuerte Vertikalöfen (auch als Schachtöfen bezeichnet) eingesetzt. Ein derartiger Vertikalofen ist beispielsweise in US 3,230,064 A zur Herstellung von Glas-Hohlkugeln beschrieben. Dabei wird mittels eines Brenners in einer Brennkammer des Vertikalofens eine aufwärts gerichtete heiße Gasströmung erzeugt. Im Bereich des Brenners wird kontinuierlich ein Brenngut eingebracht, das aus mit einem Treibmittel versetzten Glaspartikeln besteht. In der heißen Gasströmung werden die Glaspartikel einerseits aufgeschmolzen. Des Weiteren wird durch das Treibmittel in den aufgeschmolzenen Glaspartikeln Gas erzeugt, durch welches die Glaspartikel zu den gewünschten Hohlkugeln aufgebläht (expandiert) werden. Aufgrund ihrer dann erniedrigten Dichte schwimmen die Hohlkugeln in der Gasströmung auf und werden zusammen mit den Abgasen der Befeuerung durch einen am oberen Ende des Vertikalofens angeordneten Gasaustritt aus der Brennkammer ausgetragen. Die ausgetragenen Hohlkugeln werden gemäß US 3,230,064 A in einem dem Vertikalofen nachgeschalteten Zyklon-Abscheider oder einem Sackfilter von der Gasströmung getrennt. Ein ähnlicher Vertikalofen ist in US 2,421,902 A zur Herstellung von expandierten Perlit-Partikeln offenbart.

Zur Herstellung von Blähglaspartikeln werden dem Vertikalofen nicht expandierte Brenngutpartikel ("Grünkorn") zugeführt, die in der Brennkammer des Ofens multizelluär zu den Blähglaspartikeln expandieren. Ein Verfahren zur Herstellung von solchen Brenngutpartikeln ist beispielsweise aus WO 2005/087676 A1 bekannt. Dabei wird zunächst eine wässrige Suspension ("Schlicker") angesetzt, die Glasmehl, Wasserglas und ein Blähmittel enthält, wobei die Suspension gemäß WO 2005/087676 A1 in einem Nassmahlverfahren weiterverarbeitet wird. Die Suspension wird durch Granulierung und Trocknung in die Brenngutpartikel überführt. Zur Erzielung feinkörniger Blähglasgranulate wird der Granulierprozess meist in einem Sprühturm durchgeführt. Der Einsatz eines Sprühturms bedingt allerdings einen vergleichsweise hohen Investitions- und Betriebsaufwand. Insbesondere ist der Betrieb eines Sprühturms mit hohem Energieaufwand verbunden.

Alternative Granuliermethoden, beispielsweise unter Einsatz eines Drehtellers, wie sie insbesondere zur Erzeugung grobkörniger Blähglas-Granulate eingesetzt werden, sind zwar häufig energieeffizienter, haben aber jeweils andere spezifische Nachteile. So führt beispielsweise der Einsatz eines Drehtellers typischerweise zu Grünkornpartikeln mit vergleichsweise unrunder Außenkontur sowie zu einer vergleichsweise großen Streuung der Korngröße. Für die Herstellung von feinkörnigen Granulaten ist diese Methode nur eingeschränkt geeignet.

Der Erfindung liegt die Aufgabe zugrunde, eine besonders effiziente Herstellung von feinkörnigen Blähglaspartikeln, insbesondere Blähglas-Mikropartikeln, zu ermöglichen.

Bezüglich eines Verfahrens zur Herstellung von Blähglaspartikeln wird diese Aufgabe erfindungsgemäß gelöst durch die Merkmale des Anspruchs 1. Bezüglich einer Anlage zur Herstellung von Blähglaspartikeln wird diese Aufgabe erfindungsgemäß gelöst durch die Merkmale des Anspruchs 9. Vorteilhafte und teils für sich gesehen erfinderische Ausgestaltungen und Weiterentwicklungen der Erfindung sind in den Unteransprüchen und der nachfolgenden Beschreibung dargelegt.

Verfahrensgemäß wird eine wässrige Suspension aus Ausgangsstoffen hergestellt, die Glasmehl und Wasserglas, sowie optional ein Blähmittel (Treibmittel) umfassen. Diese Suspension wird durch Versprühen zu Brenngutgutpartikeln partikuliert. Die Brenngutpartikel werden in einem Prozessraum eines Brennofens bei einer die Erweichungstemperatur des Glasmehls überschreitenden Brenntemperatur gebrannt, wobei die Brenngutpartikel durch thermisch verursachte Gasbildung im Inneren der Brenngutpartikel zur Bildung der Blähglaspartikel multizellulär, d.h. schaumartig, expandieren. Das erfindungsgemäße Herstellungsverfahren ist dadurch gekennzeichnet, dass die wässrige Suspension der Ausgangsstoffe zur Bildung der Brenngutpartikel unmittelbar in den Prozessraum des Brennofens versprüht wird. Mit "Prozessraum" ist dabei ein beheizter Innenraum des Brennofens bezeichnet, in dem die bestimmungsgemäße Wärmebehandlung der Brenngutpartikel erfolgt. Im Unterschied zu herkömmlichen Verfahren der Blähglasherstellung findet in dem Prozessraum des Brennofens nicht lediglich der eigentliche Brennprozess (Expansionsprozess) statt, sondern auch der vorgeschaltete Granulier- und Trocknungsprozess.

Die erfindungsgemäße Anlage zur Durchführung des Verfahrens umfasst entsprechend den Brennofen, in dessen Prozessraum die Brenntemperatur erzeugbar ist. Die Anlage umfasst weiterhin eine Beschickungseinrichtung, mittels der der Prozessraum mit den zu expandierenden Brenngutpartikeln beschickbar ist. Erfindungsgemäß umfasst die Beschickungseinrichtung dabei eine Zerstäubereinheit, die in den Prozessraum mündet, um die vorstehend beschriebene Suspension der Ausgangsstoffe zur Bildung der Brenngutpartikel unmittelbar in den Prozessraum des Brennofens zu versprühen.

Die Erfindung beruht auf der Überlegung, dass die Grünkorn-Herstellung mittels des Sprühturms in einer besonders hohen Produktqualität resultiert, dass jedoch die Investitionskosten und Energiekosten bei der Verwendung eines Sprühturms ungünstigerweise besonders hoch sind.

Diese Diskrepanz löst die Erfindung auf, indem zwar ein Sprühprozess zur Herstellung des nicht expandierten Brennguts (also des Grünkorns) herangezogen wird (und somit eine hohe Produktqualität sichergestellt wird), dass dieser Sprühprozess jedoch nicht in einem separaten Sprühturm durchgeführt wird, sondern unmittelbar in den Brennofen verlagert wird. In dem Prozessraum des Brennofens findet erfindungsgemäß also zum einen in an sich herkömmlicher Weise der Brennprozess, also das Aufschmelzen und Aufschäumen der Brenngutpartikel zu den Blähglaspartikeln statt. Zum anderen findet aber auch die Herstellung der Brenngutpartikel in dem Prozessraum des Brennofens statt, indem der versprühten Suspension durch thermische Einwirkung das Suspensionswasser entzogen wird.

Die simultane Nutzung ein und desselben Brennofens für den Granulier- und Trocknungsprozess einerseits und den Expansions- bzw. Brennprozess andererseits ermöglicht eine Vereinfachung der zur Herstellung der Blähglaspartikel eingesetzten Anlage und bewirkt somit einen verringerten Investitionsaufwand für die Umsetzung des Verfahrens. Zudem wird ein besonders effektives Herstellungsverfahren für die Blähglaspartikel ermöglicht, wobei gleichzeitig eine hohe Qualität der Blähglaspartikel, insbesondere hinsichtlich ihrer Sphärizität und Korngrößenverteilung gewährleistet wird.

Die Zerstäubereinheit umfasst insbesondere eine Einstoffdüse, mit deren Hilfe die wässrige Suspension unter hohem Druck in den Prozessraum gesprüht wird. Es ist im Rahmen der Erfindung jedoch auch denkbar, dass die Suspension mittels einer Zweistoffdüse unter Verwendung eines Zerstäubergases dispergiert wird. Prinzipiell kann die Zerstäubereinheit auch eine rotierende Zerstäuberscheibe umfassen, um aus der Suspension ein fein verteiltes Aerosol zu erzeugen.

Das erfindungsgemäße Verfahren findet vorzugsweise Verwendung für die Herstellung von Blähglaspartikeln, deren mittlerer Durchmesser zwischen 10 µm und 500 µm insbesondere bei etwa 100 µm liegt. Entsprechend ist die Zerstäubereinheit insbesondere dazu eingerichtet, Brenngutpartikel (die je nach Restfeuchtegehalt als Tröpfchen oder feuchte Körner vorliegen) zu sprühen, deren mittlerer Durchmesser zwischen 5 µm und 250 µm, insbesondere bei 50 µm liegt.

Das vorstehend beschriebene Verfahren ist insofern zur Herstellung dieser vergleichsweise kleinen Brenngutpartikel besonders geeignet, als bei diesen Partikeln aufgrund der kleinen Dimensionen und der geringen Masse die Verdampfung der Restfeuchte und die Aufheizung der Glasmatrix bis in den Partikelkern quasi instantan erfolgen. Hierdurch können sich - auch bei der vergleichsweise hohen Temperatur - keine hohen Materialspannungen und Druckgradienten im Inneren der trocknenden Brenngutpartikel ausbilden, die ansonsten zum Aufplatzen der Brenngutpartikel führen könnten.

In einer Ausführungsvariante des Verfahrens wird die Suspension der Ausgangsstoffe unmittelbar in einen heißen Bereich des Prozessraums eingesprüht, in dem die Brenntemperatur herrscht.

Vorzugsweise wird die Suspension aber in eine kältere Vorstufe des Brennofens eingesprüht, in der eine die Erweichungstemperatur des Glasmehls unterschreitende Temperatur (im Folgenden als "Trocknungstemperatur" bezeichnet) herrscht. Dabei werden die durch das Versprühen gebildeten Brenngutpartikel vorzugsweise unmittelbar aus der Vorstufe (ohne Zwischenlagerung oder Transport außerhalb des Brennofens) demjenigen Bereich des Prozessraums zugeführt, in dem die Brenntemperatur herrscht. Aufgrund des in der Vorstufe vornehmlich stattfindenden Trocknungsprozesses der Brenngutpartikel wird die Vorstufe im Folgenden auch mit "Trocknungsstufe" bezeichnet, während der Bereich des Brennofens, in dem die Brenntemperatur herrscht, aufgrund des dort stattfindenden Brennprozesses als "Brennstufe" bezeichnet ist.

Die gesprühten Brenngutpartikel werden vorzugsweise in der Trocknungsstufe sowohl wasserfrei getrocknet als auch gleichzeitig auf eine Temperatur gebracht, die unterhalb der Erweichungszone des Glasanteils liegt. Erst dann gelangen sie in die Brennstufe und werden dort so weit aufgeheizt, bis sie blähen. Es findet somit in der Trocknungsstufe eine stetige Aufheizung des gesprühten Brenngutes statt. Eine Erkaltung der Brenngutpartikel zwischen dem Sprühprozess und dem Brennprozess, die bei herkömmlichen Verfahren dadurch bedingt ist, dass die Brenngutpartikel nach der Herstellung im Sprühturm bei Raumtemperatur zwischengelagert werden, findet somit nicht statt. Hierdurch entfällt der mit der Erkaltung der Brenngutpartikel herkömmlicherweise verbundene Energieverlust.

Zur Realisierung der unmittelbaren Überführung der Brenngutpartikel aus der Trocknungsstufe in die Brennstufe grenzen diese beiden Stufen des Prozessraums innerhalb des Brennofens vorzugsweise unmittelbar aneinander an. Mit anderen Worten mündet eine Austrittsöffnung der Trocknungsstufe zumindest näherungsweise direkt (unmittelbar) in eine Eintrittsöffnung der Brennstufe. Dabei können die Trocknungsstufe und die Brennstufe im Rahmen der Erfindung wahlweise miteinander (insbesondere einstückig) verbunden sein. Vorzugsweise sind die Trocknungsstufe und die Brennstufe aber zur Vermeidung thermischer Spannungen und zur Vereinfachung der Wartung des Brennofens mechanisch voneinander getrennt.

In vorteilhafter Ausgestaltung des Verfahrens wird die Suspension der Ausgangsstoffe etwa mit Umgebungstemperatur, nämlich mit einer zwischen 20 °C und 80 °C (vorzugsweise bei etwa 60 °C) liegenden Temperatur (Suspensionstemperatur) in den Prozessraum eingesprüht. Die in der Trocknungsstufe herrschende Trocknungstemperatur ist vorzugsweise zwischen 400 °C und 700 °C, insbesondere auf etwa 650 °C eingestellt. Die in der Brennstufe des Brennofens herrschende Brenntemperatur ist vorzugsweise zwischen 900 °C und 1200 °C, insbesondere auf etwa 950 °C eingestellt.

In einer bevorzugten Ausführungsform wird der Brennofen zumindest am Ende der Trocknungsstufe durch Einleiten eines Heißgasstroms in den Prozessraum beheizt, wobei der Heißgasstrom mittels mindestens eines externen Heißgaserzeugers erzeugt wird. Der Brennofen wird somit zumindest im Bereich der Trocknungsstufe bevorzugt nicht unmittelbar befeuert, so dass keine Brennerflamme in den Prozessraum schlägt. Vielmehr wird nur das durch den Heißgaserzeuger erzeugte Heißgas in die Trocknungsstufe eingeleitet. Als Heißgaserzeuger wird vorzugsweise ein herkömmlicher Brenner eingesetzt. Es ist jedoch im Rahmen der Erfindung auch denkbar, einen andersartigen Heißgaserzeuger einzusetzen. So ist in einer zweckmäßigen Ausgestaltungsform der Erfindung beispielsweise vorgesehen, den zur Einleitung in die Trocknungsstufe des Brennofens vorgesehenen Heißgasstrom aus dem Abgasstrom eines Verbrennungsmotors zu speisen.

Der Brennofen ist vorzugsweise als Vertikalofen ausgeführt, der einen Prozessraum mit einer langgestreckten, hinsichtlich seiner Längsausdehnung vertikal ausgerichteten Geometrie aufweist. Die vertikale Ausrichtung des Prozessraums hat den Vorteil, dass sowohl die Strömungsrichtung des Heißgasstroms als auch die Schwerkraft parallel zu der Längserstreckung des Prozessraums ausgerichtet sind. Mithin sind die quer zu der Prozessraumwand auf die Blähglas- und Brenngutpartikel wirkenden Kraftkomponenten, die ein Verkleben der Partikel mit der Prozessraumwand fördern würden, besonders gering. Vorzugsweise wird der Heißgasstrom an einem unteren Ende des Vertikalofens in den Prozessraum eingeleitet, so dass der hierdurch erzeugte Heißgasstrom den Prozessraum von unten nach oben durchläuft. Die Suspension der Ausgangsstoffe wird dabei von unten in vertikal nach oben weisender Richtung in den Prozessraum eingesprüht. Entsprechend mündet auch die Zerstäubereinheit der Beschickungseinrichtung an einem unteren Ende in den Prozessraum.

Nachstehend werden Ausführungsbeispiele der Erfindung anhand einer Zeichnung näher erläutert. Darin zeigen:

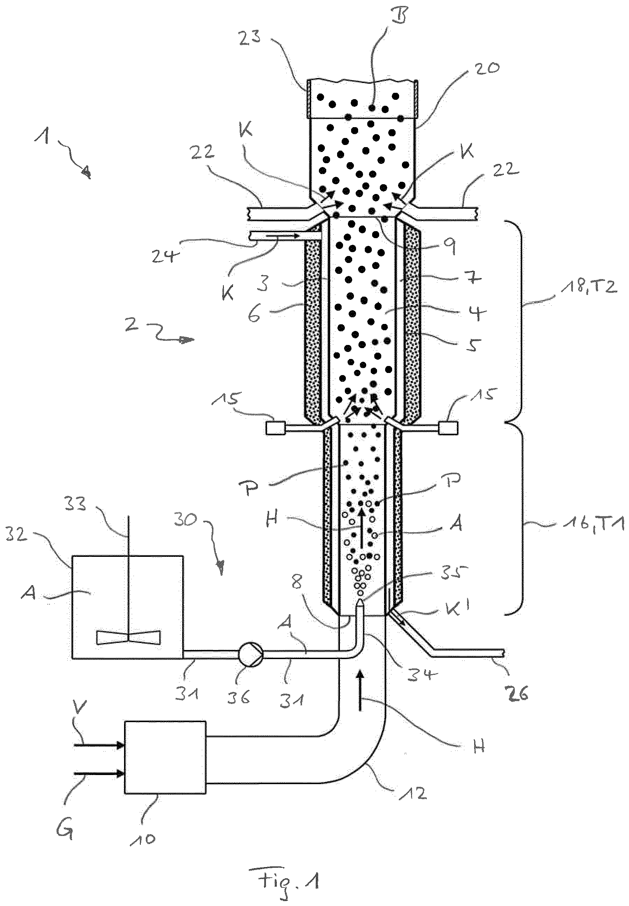

- Fig. 1: in schematischer Darstellung eine Anlage zur Herstellung von multizellulär expandierten Mikropartikeln aus Glas (Blähglas-Mikropartikeln), mit einem als Vertikalofen ausgebildeten Brennofen, umfassend einen in eine Trocknungsstufe und in eine Brennstufe unterteilten Prozessraum, sowie mit einer Beschickungseinrichtung, umfassend eine Zerstäuberdüse, die zum Einsprühen einer wässrigen (Ausgangs-)Suspension in die Trocknungsstufe des Vertikalofens mündet, so dass sich beim Einsprühen der Suspension in der Trocknungsstufe nicht expandierte Brenngutpartikel bilden, die in der anschließenden Brennstufe zu den Blähglaspartikeln expandieren,
- Fig. 2: in Darstellung gemäß Fig. 1 eine alternative Ausführungsform der Anlage, bei der die Trocknungsstufe und die Brennstufe des Vertikalofens mechanisch voneinander getrennt sind,
- Fig. 3: in weiter vereinfachter Darstellung eine weitere Ausführungsform der Anlage gemäß Fig. 2, und
- Fig. 4: wiederum in Darstellung gemäß Fig. 1 eine Ausführungsform der Anlage gemäß Fig. 1, in der der Prozessraum einstufig ausgeführt ist.

Einander entsprechende Teile und Größen sind in allen Figuren stets mit gleichen Bezugszeichen versehen.

Fig. 1 zeigt in grober schematischer Vereinfachung eine Anlage 1 zur Herstellung von multizellulär expandierten (also schaumartigen) Mikropartikeln aus Glas, die nachfolgend als Blähglaspartikel B bezeichnet sind. Die mittels der Anlage 1 herzustellenden Blähglaspartikel B weisen eine weitgehend geschlossene, sphärische Außenkontur auf, deren Durchmesser 1 Millimeter unterschreitet und insbesondere in einem Bereich zwischen 10 und 500 Mikrometer liegt. Hinsichtlich ihrer inneren Struktur weisen die Blähglaspartikel B eine Glas-Matrix auf, die eine Vielzahl von weitgehend geschlossenen (also miteinander unverbundenen bzw. zueinander abgegrenzten) Hohlräumen umschließt.

Zentraler Bestandteil der Anlage 1 ist ein Brennofen, der aufgrund seiner langgestreckt-vertikalen Bauweise nachfolgend als Vertikalofen 2 bezeichnet ist. Der Vertikalofen 2 umfasst einen im Wesentlichen hohlzylindrischen, umlaufenden Ofenmantel 3 aus hochtemperaturfestem Stahl, der einen schachtartig langgestreckten, hinsichtlich seiner Längserstreckung vertikal ausgerichteten Prozessraum 4 umgibt. In typischer Dimensionierung weisen der Vertikalofen 2 und der darin ausgebildete Prozessraum 4 eine Höhe von etwa 6 bis 15 Meter auf.

Der Vertikalofen 2 umfasst des Weiteren eine Außenwand 5, die den Ofenmantel 3 (bezüglich der vertikalen Achse des Vertikalofens 2) konzentrisch umgibt, und die vorzugsweise ebenfalls aus Stahl gebildet ist. An einer Außenseite der Außenwand 5 ist eine thermische Isolierung 6 angebracht. Zwischen dem Ofenmantel 3 und der Außenwand 5 ist ein den Ofenmantel 3 unmittelbar ringförmig umgebender Freiraum gebildet. Dieser Freiraum zwischen dem Ofenmantel 3 und der Isolierung 6 wird im Betrieb der Anlage 1 von Kühlluft K durchströmt und ist deshalb nachfolgend auch als Kühlspalt 7 bezeichnet.

Der Ofenmantel 3 hat zumindest im Wesentlichen die Form eines zylindrischen Rohres, dessen Durchmesser sich auf etwa halber Höhe des Prozessraums 4 nach oben hin stufenartig erweitert. An seinem unteren Ende beginnt der Prozessraum 4 an einem Gaseintritt 8, der zumindest im Wesentlichen die gesamte Querschnittsfläche des Prozessraums 4 einnimmt. An seinem oberen Ende mündet der Prozessraum 4 in einem Gasaustritt 9, der ebenfalls zumindest im Wesentlichen die gesamte Querschnittsfläche des (hier breiteren) Prozessraums 4 einnimmt.

Im Betrieb der Anlage 1 wird der Prozessraum 4 von einem Heißgasstrom H von unten nach oben durchströmt. Zur Erzeugung dieses Heißgasstroms H umfasst die Anlage 1 einen in Fig.1 lediglich schematisch angedeuteten Heißgaserzeuger. Der Heißgaserzeuger ist hier beispielhaft als externer Brenner 10 ausgebildet, der von dem Prozessraum 4 hinreichend räumlich getrennt angeordnet ist, so dass die von dem Brenner 10 ausgestoßene Brennerflamme nicht in den Prozessraum 4 schlägt. Der Brenner 10 ist mit einem Brenngas G, insbesondere Erdgas, betrieben. Zur Erzeugung eines Verbrennungsgemischs wird dem Brenner 10 des Weiteren ein Primärluftstrom V als Verbrennungsluft zugeführt. Optional wird dem Brenner 10 zusätzlich zur Erhöhung des Volumenstroms des Heißgasstroms H und/oder zur Einstellung der Temperatur des Heißgasstroms H ein nicht dargestellter Sekundärluftstrom zugeführt. Das durch den Brenner 10 erzeugte Heißgas wird über eine Heißgasleitung 12 dem Prozessraum 4 als Heißgasstrom H zugeführt.

In einer abgewandelten Ausführungsform der Anlage 1 ist der Heißgaserzeuger durch einen Verbrennungsmotor gebildet, wobei die Heißgasleitung 12 mit einer Abgasleitung des Verbrennungsmotors verbunden ist. In diesem Fall wird der Heißgasstrom H aus dem Abgas des Verbrennungsmotors pulsierend, d.h. mit einem zeitlich pulsartig fluktuierenden Gasdruck, erzeugt.

Etwa auf halber Höhe des Prozessraums 4, nämlich in dem Bereich der vorstehend beschriebenen Querschnittserweiterung, ist eine Anzahl von (beispielsweise sechs) zusätzlichen, gasbetriebenen Brennern 15 angeordnet. Die Brenner 15 sind kranzartig um den Umfang des Prozessraums 4 verteilt positioniert. In einer Ausführungsvariante der Anlage 1 sind auch die Brenner 15 außerhalb des Prozessraums 4 angeordnet, so dass die von ihnen erzeugten Flammen nicht in den Prozessraum 4 schlagen, und dass vielmehr nur die Heißgase der Brenner 15 in den Prozessraum 4 eingeleitet werden. Alternativ hierzu sind die Brenner 15 derart nah an dem Prozessraum 4 angeordnet, dass sie den Prozessraum 4 unmittelbar befeuern.

Durch die vorstehend beschriebene Anordnung des Brenners 10 (oder gegebenenfalls eines andersartigen Heißgaserzeuger) einerseits und der zur Nachfeuerung vorgesehenen Brenner 15 andererseits wird in dem Prozessraum 4 ein gestuftes Temperaturprofil erzeugt, durch das der Prozessraum 4 in zwei vertikal aneinandergrenzende Abschnitte mit deutlich verschiedener Temperatur gegliedert ist. Der untere Abschnitt des Prozessraums 4 ist im Folgenden als Trocknungsstufe 16 bezeichnet, während der obere Abschnitt im Folgenden als Brennstufe 18 bezeichnet ist.

An den Gasaustritt 9 des Vertikalofens 2 schließt gemäß Fig. 1 ein Bereich an, der als Kühlfalle 20 dient und der einen gegenüber dem Querschnitt der Brennstufe 18 wiederum erweiterten Querschnitt aufweist. An einem unteren Ende der Kühlfalle 20 münden hierbei eine oder mehrere Kühlluftleitungen 22, über die kalte Kühlluft K in die Kühlfalle 20 eingeblasen wird. Die Kühlfalle 20 mündet ihrerseits in eine Ofenabgasleitung 23, die zu einem (hier nicht näher dargestellten) Feststoffabscheider führt. Der Feststoffabscheider ist hierbei beispielsweise als Zyklon-Abscheider oder Filter ausgebildet.

Über eine oder mehrere Kühlluftzuleitungen 24 wird weitere Kühlluft K am oberen Ende des Vertikalofens 2 in den Kühlspalt 7 eingeleitet. Zur Abführung von aufgeheizter Kühlluft K' ist eine Kühlluftableitung 26 am unteren Ende des Vertikalofens 2 mit dem Kühlspalt 7 verbunden. Optional ist zur Kühlung des Ofenmantels 3 in dem besonders heißen mittleren Bereich anstelle oder zusätzlich zu der dargestellten Luftkühlung auch eine Wasserkühlung vorgesehen.

Schließlich umfasst die Anlage 1 eine Beschickungseinrichtung 30, mit der eine nachfolgend näher beschriebene (Ausgangs-)Suspension A in den Prozessraum 4 eingesprüht werden kann. Die Beschickungseinrichtung 30 umfasst eine Beschickungsleitung 31, die einen zugeordneten Vorlagebehälter 32 mit dem unteren Ende des Prozessraums 4 (genauer der Trocknungsstufe 16) verbindet. Dem Vorlagebehälter 32 ist ein Rührwerk 33 zugeordnet. Die Beschickungsleitung 31 ist bei dem Ausführungsbeispiel gemäß Fig.1 exemplarisch radial durch eine Wand der Heißgaszuleitung 12 hindurch in den Prozessraum 4 hineingeführt, wobei sie am unteren Ende des Prozessraums 4 zentral in diesem endet. Alternativ kann die Beschickungsleitung 31 auch durch den Ofenmantel 3 hindurchgeführt sein.

Mit einem endseitigen Abschnitt 34 verläuft die Beschickungsleitung 31 senkrecht innerhalb der Heißgasleitung 12. Am Ende des Abschnitts 34 schließt die Beschickungsleitung 31 mit einer Zerstäuberdüse 35 abschließt. Eine Pumpe 36, die in der Beschickungsleitung 31 angeordnet ist, fördert die Suspension A aus dem Vorlagebehälter 32 mit hohem Druck in den Prozessraum 4, so dass die Suspension A im Innern des Vertikalofens 2 zerstäubt wird. Die aus der Suspension A durch den Sprühvorgang entstehenden Partikel werden im Folgenden als Brenngutpartikel P bezeichnet. Das Einsprühen der Suspension A erfolgt mit dem Heißgasstrom H im Gleichstrom. Die Suspension A wird also von unten in nach oben aufsteigender Richtung in den Prozessraum 4, genauer gesagt in dessen Trocknungsstufe 16 eingedüst.

Im vorliegenden Ausführungsbeispiel ist als Zerstäuberdüse 35 eine Einstoffdüse eingesetzt. Alternativ kann das Dispergieren der Suspension A im Prozessraum 4 im Rahmen der Erfindung auch mittels einer Zweistoffdüse oder mittels einer rotierenden Zerstäuberscheibe erfolgen.

Zur Herstellung der Blähglaspartikel P werden in dem Vorlagebehälter 32 Ausgangsstoffe umfassend Altglasmehl, Wasserglas sowie Blähmittel (z.B. Natronsalpeter) unter Zugabe von warmem Wasser zu einem homogenen Schlicker (nämlich der Ausgangssuspension A) verrührt. Alternativ hierzu wird die Ausgangssuspension A in einem mehrstufigen Prozess hergestellt, der beispielsweise gemäß WO 2005/087676 A1 einen Nassmahlschritt umfasst. Der Vorlagebehälter 32 bildet in diesem Fall lediglich die letzte Stufe dieses Prozesses und kann auch lediglich als Vorratsverhälter (Pufferspeicher) dienen.

Der Heißgasstrom H wird in dem Vertikalofen 2 zunächst derart erzeugt, dass er an dem Gaseintritt 8 (und somit im Bereich der Zerstäuberdüse 35) eine (Trocknungs-) Temperatur T1 aufweist, die knapp unterhalb der Erweichungstemperatur (Littleton-Punkt) der Brenngutpartikel P liegt. Bei einer beispielhaften Erweichungstemperatur von ca. 700 °C des Glasmaterials der Brenngutpartikel P wird der Heißgasstrom H beispielsweise derart eingestellt, dass er am Gaseintritt 8 eine Temperatur T1 von ca. 650 °C aufweist.

Durch die Brenner 15 wird der Prozessraum 4 zusätzlich befeuert, so dass die Temperatur des Heißgasstroms H in der Brennstufe 18 auf eine - hier beispielsweise etwa bei ca. 950 °C liegende - (Brenn-)Temperatur T2 erhöht wird.

Sobald der Heißgasstrom H in der Trocknungsstufe 16 und in der Brennstufe 18 die vorgegebenen Temperaturen T1 bzw. T2 erreicht hat, wird über die Beschickungsleitung 31 kontinuierlich Suspension A in den Prozessraum 4 eingesprüht, so dass sich kontinuierlich Brenngutpartikel P bilden. Die bei der Zerstäubung entstehenden Brenngutpartikel P werden durch geeignete Wahl der Betriebsparameter der Pumpe 36 (Förderleistung, Druck) in Abstimmung mit der Geometrie der eingesetzten Zerstäuberdüse 35 mit einer gewünschten mittleren Korngröße von z.B. 50 µm hergestellt. Dabei entstehen Brenngutpartikel P, die sich durch eine enge Korngrößenverteilung und eine in guter Näherung sphärische Geometrie auszeichnen.

Dadurch, dass die Trocknungstemperatur T1 die Erweichungstemperatur des Glasmaterials unterschreitet, wird die Ausgangssuspension A nach dem Einsprühen in die Trocknungsstufe 16 getrocknet und hierdurch zu den Brenngutpartikeln P partikuliert, aber noch nicht angeschmolzen oder expandiert. Hierdurch wird ausgeschlossen, dass die Brenngutpartikel P in der Trocknungsstufe 16 miteinander, mit Teilen der Beschickungseinrichtung 31 oder mit dem Ofenmantel 3 verkleben.

Die in dem Prozessraum 4 gebildeten Brenngutpartikel P werden somit erst dann angeschmolzen, wenn sie mit dem Heißgasstrom H in die Brennstufe 18 geblasen werden. Die Brenngutpartikel P werden in der Brennstufe 18 weiterhin unter durch das Blähmittel verursachter Gasbildung aufgeschäumt (multizellulär expandiert). Die durch den Expansionsprozess entstehenden Blähglaspartikel B weisen beispielhaft eine mittlere Korngröße von 80 µm auf.

Durch die räumliche Zusammenfassung des Granulierprozesses und des Brennprozesses (Expansionsprozesses) in dem Prozessraum 4 wird vermieden, dass die Brenngutpartikel P zwischen dem Granulierprozess und dem Brennprozess erkalten.

Die expandierten Blähglaspartikel B werden (zusammen mit einem Rest nichtexpandierter Brenngutpartikel P) mit dem Heißgasstrom H mitgerissen und somit durch den Gasaustritt 9 der Kühlfalle 20 zugeführt. Unter Wirkung der eingeblasenen Kühlluft K werden die Blähglaspartikel B unter die Erweichungstemperatur des Glasmaterials abgeschreckt. Aus der Kühlfalle 20 werden die Blähglaspartikel B schließlich in die Ofenabgasleitung 23 ausgetragen.

In dem in der Ofenabgasleitung 23 angeordneten Feststoffabscheider werden die Blähglaspartikel B von dem Abgas getrennt. Die ausgeschiedenen Blähglaspartikel B werden von mitausgetragenen, nicht-expandierten Brenngutpartikeln P (Schlechtpartikeln) getrennt und einem (nicht dargestellten) Produktreservoir, beispielsweise einem Silo zugeführt. Der gefilterte Abgasstrom wird an die Umgebung ausgestoßen oder einer weiteren Abgasbehandlung zugeführt. Vorzugsweise wird hierbei ein Teil der in dem Abgas enthaltenen Restwärme als Nutzwärme für den Herstellungsprozess rückgewonnen.

Die bei der Kühlung des Ofenmantels 3 auf etwa 400° C aufgeheizte Kühlluft K' wird über die Kühlluftableitung 26 abgeleitet und dem Brenner 10 als Teil des Primärluftstroms V zugeführt.

In einer (nicht näher dargestellten) Variante der Anlage 1 wird in die Trocknungsstufe 16 zunächst ein Kaltluftstrom eingeleitet, der erst im weiteren Verlauf der Trocknungsstufe 16 (insbesondere an deren Ende) durch Zumischung von Heißluft oder in sonstiger Weise auf die Trocknungstemperatur T1 aufgeheizt wird.

In einer weiteren (nicht näher dargestellten) Variante der Anlage 1 ist die Brennstufe 18 wiederum unterteilt in mindestens zwei Teilstufen, in denen jeweils verschiedene Temperaturen eingestellt sind. In zweckmäßiger Ausführung der Anlage 1 nimmt die Brenntemperatur, in Flussrichtung des Heißgasstroms gesehen, von Teilstufe zu Teilstufe zu. So ist insbesondere in einer an die Trocknungsstufe 16 anschließenden ersten Teilstufe der Brennstufe 18 eine niedrigere Brenntemperatur von beispielsweise 900 °C eingestellt, während in einer an die erste Teilstufe anschließenden zweiten Teilstufe der Brennstufe 18 eine höhere Brenntemperatur von z.B. 980 °C eingestellt ist. Zwischen den Teilstufen sind dabei jeweils weitere Brenner zur weiteren Aufheizung des Heißgasstroms H angeordnet. Zweckmäßigerweise nimmt auch der Durchmesser des Prozessraums 4 von Teilstufe zu Teilstufe zu.

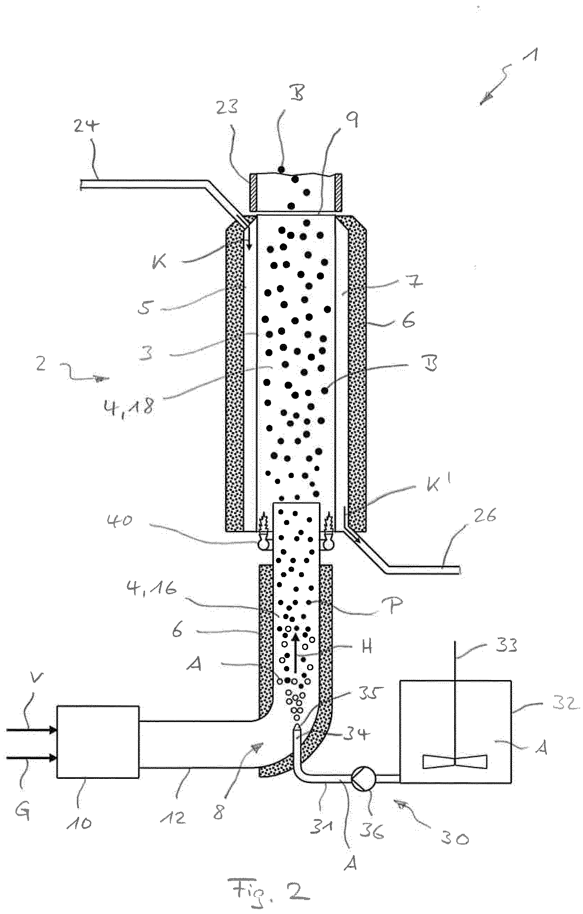

Eine wiederum weitere Variante der Anlage 1 ist in Fig. 2 dargestellt. Diese unterscheidet sich von der Anlagenvariante gemäß Fig. 1 dadurch, dass die Trocknungsstufe 16 und die Brennstufe 18 hier mechanisch unverbunden sind, so dass zwischen diesen beiden Teilen des Vertikalofens 2 ein zur Umgebung offener Ringspalt gebildet ist. Der Ofenmantel 3 weist hier im Bereich der Brennstufe 18 ebenfalls einen im Vergleich zur Trocknungsstufe 16 größeren Durchmesser auf. Ein oberer Abschnitt der Trocknungsstufe 16 ist von unten in einen unteren Abschnitt der Brennstufe 18 eingeführt. Der Ofenmantel 3 ist ferner auch von der Ofenabgasleitung 23 mechanisch getrennt. Die mechanische Trennung der Trocknungsstufe 16 von der Brennstufe 18 ermöglicht vorteilhafterweise das Einströmen von Sekundärluft in den Prozessraum 4. Zudem wird die Ausbildung von Spannungen zwischen diesen Bauteilen infolge unterschiedlicher thermischer Ausdehnung verhindert. Durch die mechanische Trennung der Trocknungsstufe 16 von der Brennstufe 18 und von der Ofenabgasleitung 23 werden ferner die Reparatur und Wartung der Anlage 1 erheblich vereinfacht.

In dem zwischen der Trocknungsstufe 16 und der Brennstufe 18 gebildeten Ringspalt ist anstelle der sechs Brenner 15 ein einziger Brenner in Form eines Brenngas-Ringverteilers 40 angeordnet, der an seiner Oberseite mit einer Vielzahl von Brenngas-Ausblasöffnungen versehen ist. Im Betrieb der Anlage 1 bildet sich an diesen Brenngas-Ausblasöffnungen ein ringförmiger Flammenkranz, durch den der Heißgasstrom H in der Brennstufe 18 auf die vorgegebene Brenntemperatur T2 aufgeheizt wird. Allerdings kann der Brenngas-Ringverteiler 40 auch bei der Anlagenvariante gemäß Fig. 2 durch einen Kranz einzelner Brenner ersetzt sein. Bei der Anlage 1 gemäß Fig. 2 wird die Suspension A wiederum in die Trocknungsstufe 16 eingesprüht.

Eine Kühlfalle 20 (wie sie in Fig. 1 abgebildet ist) ist in Fig. 2 nicht abgebildet. Sie ist optional aber auch bei der dortigen Ausführungsform vorhanden.

Gemäß Fig. 2 erstreckt sich der Kühlspalt 7 nur über den Bereich der Brennstufe 18. Im Bereich der Trocknungsstufe 16 fehlt die Außenwand 5. Der Vertikalofen 2 ist im Bereich der Trocknungsstufe 16 also nur einwandig ausgebildet. In einer weiteren Ausführungsvariante der Anlage 1 erstreckt sich der Kühlspalt 7 sogar nur über einen unteren Bereich der Brennstufe 18, in dem besondere hohe Temperaturen herrschen, und in dem daher die größte Klebeneigung des Brenngutes besteht. Sowohl die Trocknungsstufe 16 als auch der obere, restliche Bereich der Brennstufe 18 sind in diesem Fall lediglich isoliert oder werden nur schwach gekühlt.

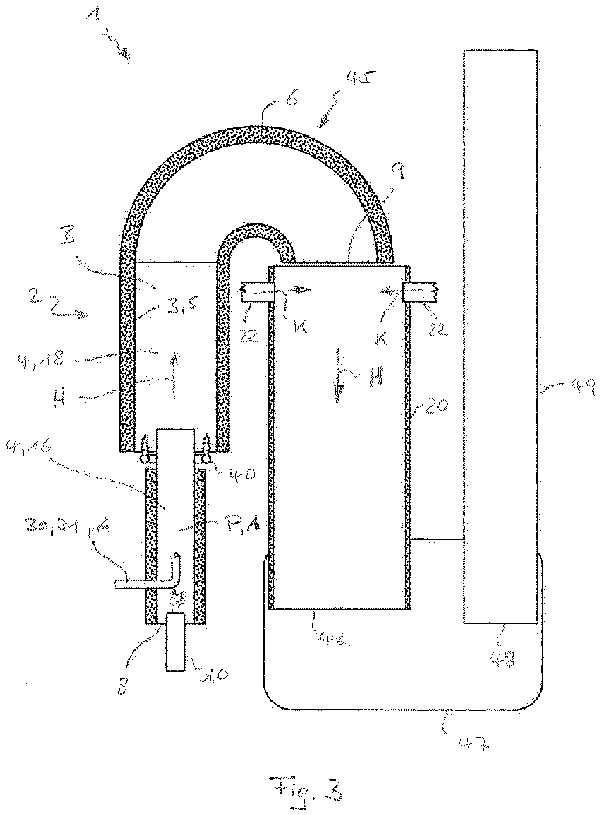

Fig. 3 zeigt eine weiterentwickelte Ausführungsform der Anlage 1 gemäß Fig. 2. Diese unterscheidet sich von den vorstehend beschriebenen Anlagenvarianten dadurch, dass an den hohlzylindrischen Ofenmantel 3 ein Krümmer 45 anschließt, durch den der Heißgasstrom H um etwa 180° umgelenkt wird. Der innerhalb des hohlzylindrischen Teils des Prozessraums 4 nach oben gerichtete Heißgasstrom H verlässt den Krümmer 45 somit mit nach unten weisender Strömungsrichtung.

An den Krümmer 45 schließt die Kühlfalle 20 an, in deren oberen Bereich seitlich die Kühlluftleitungen 22 münden. Gemäß Fig. 3 mündet die Kühlfalle 20 unmittelbar in einen Einlass 46 eines - hier schematisch dargestellten - Feststoffabscheiders 47, dessen Auslass 48 zur Ableitung der Ofenabgase mit einem Schornstein 49 verbunden ist.

Weiterhin im Unterschied zu den vorstehend erläuterten Ausführungsvarianten ist der Brenner 10 in der Ausführungsform gemäß Fig. 3 derart am Gaseintritt 8 der Trocknungsstufe 16 angeordnet, dass die Flammen des Brenners 10 im Betrieb der Anlage 1 in diesem Fall direkt in den Prozessraum 4 hineinschlagen.

Ebenfalls analog zu den Fig. 1 und Fig. 2 ist der Vertikalofen 2 auch in der Ausgestaltung gemäß Fig. 3 doppelwandig ausgebildet, um eine Kühlung des Ofenmantels 3 zu gewährleisten. Die doppelwandige Struktur des Vertikalofens 2 ist in Fig. 3 lediglich aus Vereinfachungsgründen nicht explizit dargestellt.

Die durch den Krümmer 45 bewirkte Umlenkung des Heißgasstroms H hat einerseits den Vorteil, dass hierdurch die Bauhöhe der Anlage 1 vergleichsweise gering gehalten werden kann. Andererseits hat die Umlenkung des Heißgasstroms H auch den Vorteil, dass die mit dem Heißgasstrom H aus dem Prozessraum 4 ausgetragenen Blähglaspartikel B in der Kühlfalle 20 mit dem Heißgasstrom H nach unten fallen. Hierdurch wird auf einfache, aber effektive Weise ausgeschlossen, dass Blähglaspartikel B und nicht-expandierte Brenngutpartikel P entgegen der Strömungsrichtung des Heißgasstroms H in den Prozessraum 4 zurückfallen.

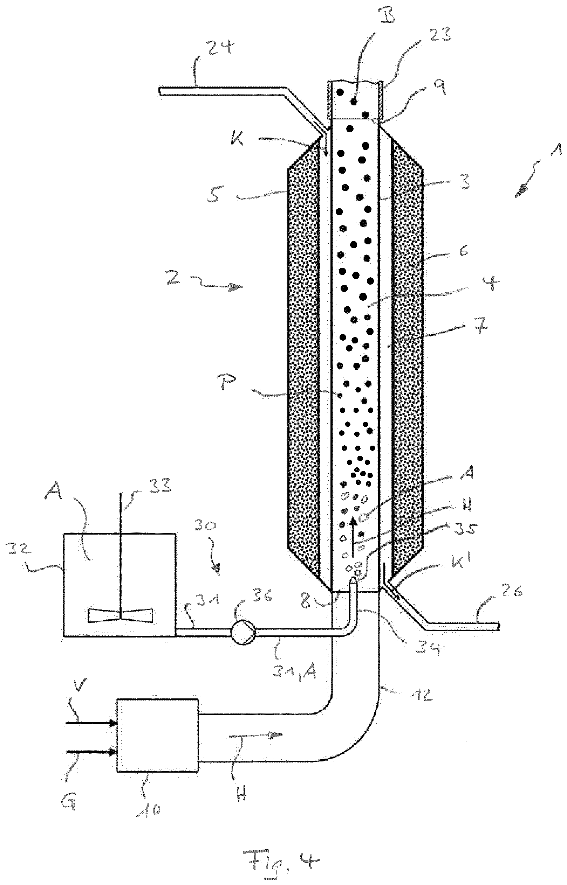

Fig. 4 zeigt eine weitere Ausführungsvariante der Anlage 1, die wiederum im Wesentlichen analog zu der Ausführungsform gemäß Fig. 1 ausgebildet ist. Im Unterschied zu der Ausführungsform gemäß Fig. 1 ist hier jedoch keine Nachfeuerung vorgesehen. Der Vertikalofen 2 ist also nicht mit den weiteren Brennern 15 bzw. dem Brenngas-Ringverteiler 40 ausgestattet. Hierdurch ist der Prozessraum 4 einstufig aufgebaut. Im Betrieb der Anlage 1 liegt somit in dem gesamten Prozessraum 4 eine (zumindest annähernd) einheitliche Temperatur vor. Zur Herstellung der Blähglaspartikel B wird in diesem Fall der Heißgasstrom H derart erzeugt, dass bereits am Gaseintritt 8 die oberhalb der Erweichungstemperatur der Brenngutpartikel P liegende Brenntemperatur T2 herrscht. Die Partikulierung der in den Prozessraum 4 eingesprühten Suspension A, die Trocknung der hieraus resultierenden Brenngutpartikel P und deren Expansion zu den Blähglaspartikeln B erfolgt hierbei in einem einzigen kontinuierlichen Prozessschritt.

Bei allen vorstehend beschriebenen Ausführungsbeispielen der Erfindung wird optional ein Trennmittel, z.B. feingemahlenes Kaolin, in den Prozessraum 4 eingebracht, um ein Verkleben der Brenngutpartikel P und der Blähglaspartikel B miteinander oder mit dem Ofenmantel 3 noch effektiver zu verhindern. Das Trennmittel wird vorzugsweise in einem oberen Bereich der Trocknungsstufe 16, in dem sich aus der eingesprühten Suspension A schon feste Brenngutpartikel P gebildet haben, eingeblasen.

Die Erfindung wird an den vorstehend beschriebenen Ausführungsbeispielen besonders deutlich. Gleichwohl ist die Erfindung auf diese Ausführungsbeispiele nicht beschränkt. Vielmehr können weitere Ausführungsbeispiele der Erfindung aus den Ansprüchen und der vorstehenden Beschreibung abgeleitet werden. Insbesondere lassen sich die einzelnen Ausgestaltungsmerkmale der anhand der Figuren beschriebenen Ausführungsformen der Anlage 1 auch in anderer Weise kombinieren, ohne von der Erfindung abzuweichen.

### Bezugszeichenliste

- 1: Anlage
- 2: Vertikalofen
- 3: Ofenmantel
- 4: Prozessraum
- 5: Außenwand
- 6: Isolierung
- 7: Kühlspalt
- 8: Gaseintritt
- 9: Gasaustritt
- 10: Brenner
- 12: Heißgasleitung
- 15: Brenner
- 16: Trocknungsstufe
- 18: Brennstufe
- 20: Kühlfalle
- 22: Kühlluftleitung
- 23: Ofenabgasleitung
- 24: Kühlluftzuleitung
- 26: Kühlluftableitung
- 30: Beschickungseinrichtung
- 31: Beschickungsleitung
- 32: Vorlagebehälter
- 33: Rührwerk
- 34: Abschnitt
- 35: Zerstäuberdüse
- 36: Pumpe
- 40: Brenngas-Ringverteiler
- 45: Krümmer
- 46: Einlass
- 47: Feststoffabscheider
- 48: Auslass
- 49: Schornstein

- A: (Ausgangs-)Suspension
- B: Blähglaspartikel
- G: Brenngas
- H: Heißgasstrom
- K: (kalte) Kühlluft
- K': (aufgeheizte) Kühlluft
- P: Brenngutpartikel
- T1: (Trocknungs-) Temperatur
- T2: (Brenn-) Temperatur
- V: Primärluftstrom

## Patentansprüche

1. Verfahren zur Herstellung von Blähglaspartikeln (B), wobei eine wässrige Suspension (A) aus Ausgangsstoffen umfassend Glasmehl und Wasserglas zur Bildung von Brenngutgutpartikeln (P) versprüht wird, und wobei die Brenngutpartikel (P) in einem Prozessraum (4) eines Brennofens (2) bei einer die Erweichungstemperatur des Glasmehls überschreitenden Brenntemperatur (T2) gebrannt werden, so dass die Brenngutpartikel (P) zur Bildung der Blähglaspartikel (B) multizellulär expandieren,
**dadurch gekennzeichnet,**
**dass** die Suspension (A) der Ausgangsstoffe zur Bildung der Brenngutpartikel (P) unmittelbar in den Prozessraum (4) des Brennofens (2) versprüht wird.

2. Verfahren nach Anspruch 1,
wobei ein Brennofen (2) herangezogen wird, dessen Prozessraum (4) in eine Trocknungsstufe (16), in der eine die Erweichungstemperatur des Glasmehls unterschreitende Trocknungstemperatur (T1) herrscht, und in eine Brennstufe (18), in der die Brenntemperatur (T2) herrscht, unterteilt ist,
wobei die Suspension (A) in die Trocknungsstufe (16) versprüht wird.

3. Verfahren nach Anspruch 2,
wobei die durch das Versprühen gebildeten Brenngutpartikel (P) ohne Erkaltung aus der Trocknungsstufe (16) des Brennofens (2) der Brennstufe (18) des Brennofens (2) zugeführt werden.

4. Verfahren nach einem der Ansprüche 1 bis 3,
wobei die Suspension (A) der Ausgangsstoffe mit einer zwischen 20 °C und 80 °C, insbesondere bei etwa 60 °C liegenden Temperatur in den Prozessraum (4) eingesprüht wird.

5. Verfahren nach einem der Ansprüche 2 bis 4,
wobei die in der Trocknungsstufe (16) des Brennofens (2) herrschende Trocknungstemperatur (T1) zwischen 400 °C und 700 °C, insbesondere bei etwa 650 °C liegt.

6. Verfahren nach einem der Ansprüche 1 bis 5,
wobei die Brenntemperatur (T2) zwischen 700 °C und 1200 °C, insbesondere bei etwa 950 °C liegt.

7. Verfahren nach einem der Ansprüche 1 bis 6,
wobei der Brennofen (2) durch Einleiten eines Heißgasstroms (H) in den Prozessraum (4) beheizt wird, und wobei der Heißgasstrom (H) mittels mindestens eines von dem Prozessraum (4) räumlich getrennten Heißgaserzeugers (10) erzeugt wird.

8. Verfahren nach einem der Ansprüche 1 bis 7,
wobei als Brennofen ein Vertikalofen (2) herangezogen wird, der einen Prozessraum (4) mit einer langgestreckten, hinsichtlich seiner Längsausdehnung vertikal ausgerichteten Geometrie aufweist.

9. Anlage (1) zur Herstellung von Blähglaspartikeln (B)
- mit einem Brennofen (2), der einen Prozessraum (4) umfasst, in dem eine Brenntemperatur (T2) einstellbar ist, die eine Erweichungstemperatur von in zu expandierenden Brenngutpartikeln (P) enthaltenem Glasmehl überschreitet, sowie
- mit einer Beschickungseinrichtung (30), mittels der der Prozessraum (4) mit den zu expandierenden Brenngutpartikeln (P) beschickbar ist,
**dadurch gekennzeichnet,**
**dass** die Beschickungseinrichtung (30) eine Zerstäubereinheit (35) umfasst, mittels welcher zur Bildung der Brenngutpartikel (P) eine wässrige Suspension (A) aus Ausgangsstoffen, umfassend das Glasmehl und Wasserglas, unmittelbar in den Prozessraum (4) einsprühbar ist.

10. Anlage nach Anspruch 9,
wobei der Prozessraum (4) des Brennofens (2) in eine Trocknungsstufe (16) und in eine Brennstufe (18) unterteilt ist, wobei in der Trocknungsstufe (16) eine die Erweichungstemperatur des Glasmehls unterschreitende Trocknungstemperatur (T1) einstellbar ist, während in der Brennstufe (18) die Brenntemperatur (T2) einstellbar ist, und wobei die Zerstäubereinheit (35) der Beschickungseinrichtung (30) in die Trocknungsstufe (16) mündet.

11. Anlage nach Anspruch 10,
wobei die Trocknungsstufe (16) und die Brennstufe (18) unmittelbar aneinander angrenzen.

12. Anlage nach einem der Ansprüche 9 bis 11,
mit einem außerhalb des Prozessraums (4) angeordneten Heißgaserzeuger (10), der mittels einer Heißgasleitung (12) zur Einleitung von Heißgas (H) mit dem Prozessraum (4) verbunden ist.

13. Anlage nach einem der Ansprüche 9 bis 12,
wobei der Brennofen als Vertikalofen (2) ausgebildet ist, bei dem der Prozessraum (4) eine langgestreckte, hinsichtlich seiner Längsausdehnung vertikal ausgerichtete Geometrie aufweist.
